Europäisches Patentamt

European Patent Office

Office européen des brevets

(11) Veröffentlichungsnummer: **0 003 778**
**B1**

(12) **EUROPÄISCHE PATENTSCHRIFT**

(45) Veröffentlichungstag der Patentschrift: **19.08.81**

(21) Anmeldenummer: **79100371.8**

(22) Anmeldetag: **09.02.79**

(51) Int. Cl.³: **B 27 G 21/00, B 23 Q 11/06**

(54) Handhobelmaschine.

(30) Priorität: **17.02.78 DE 2806822**

(43) Veröffentlichungstag der Anmeldung:
**05.09.79 Patentblatt 79/18**

(45) Bekanntmachung des Hinweises auf die Patenterteilung:
**19.08.81 Patentblatt 81/33**

(84) Benannte Vertragsstaaten:
**BE CH FR GB IT NL SE**

(56) Entgegenhaltungen:
**CH - A - 354 926**
**DE - A - 2 445 233**
**DE - U - 7 812 329**

(73) Patentinhaber: **Karl M. Reich, Maschinenfabrik GmbH**
**Kisslingstrasse 1 Postfach 1740**
**D-7440 Nürtingen (DE)**

(72) Erfinder: **André, Herbert**
**Bolstrasse 9**
**D-7440 Nürtingen-Raidwangen (DE)**
Erfinder: **Schorer, Hans**
**Danziger Weg 5**
**D-7418 Metzingen (DE)**
Erfinder: **Zaiser, Adolf**
**Heerstrasse 25**
**D-7316 Köngen (DE)**

Courier Press, Leamington Spa, England.

Handhobelmaschine

Die Erfindung bezieht sich auf eine Handhobelmaschine gemäß dem Oberbegriff von Anspruch 1.

Aus der CH-A-354 926 ist eine Handhobelmaschine der eingangs genannten Art bekannt, bei der jedoch die Schutzhaube nur einseitig gelagert ist. Dabei kann es leicht vorkommen, daß sich die Schutzhaube verkantet und verklemmt und damit nicht mehr in ihre Abdeckstellung zurückkehrt. Sehr nachteilig ist weiterhin die Möglichkeit, daß sich Schmutz, Fett und Sägespäne im Lager festsetzen und damit die Reibung so erhöhen, daß die Schutzhaube in ihrer augenblicklichen Lage verharrt. Bei einer weiteren bekannten Handhobelmaschine gemäß DE-A-24 45 233 bilden die Führungsflächen einen spitzen Winkel, an dessen Ende sowohl Hobelkopf als auch Schutzhaube fliegend gelagert sind. Der Hobelkopf überragt außerdem die beiden Führungsflächen, eine Abdeckung durch die Schutzhaube ist jedoch jeweils nur bei einer der Führungsflächen vorgesehen.

Verläßt sich nun der Bedienungsmann auf eine einwandfreie, bewegliche Schutzhaube, so kann er sich im Fall eines Verklemmens oder Festsetzens der Schutzhaube an den umlaufenden Hobelmessern ernsthaft verletzen oder aber diese werden beim Absetzen der Hobelmaschine auf eine harte Unterlage beschädigt.

Aufgabe der vorliegenden Erfindung ist daher die Schaffung einer zuverlässig arbeitenden Schutzhaube, die auch bei Auftreten von Staub und Schmutz sicher in ihre Schließstellung zurückkehrt.

Diese Aufgabe wird erfindungsgemäß durch die im kennzeichnenden Teil des Anspruchs 1 angegebenen Merkmale gelöst.

Die beidseitige Lagerung der Schutzhaube gemäß Erfindung ist sicher und stabil, die Schutzhaube kann sich nicht verkanten und verklemmen und schwenkt unter Federwirkung sicher in die Abdeckstellung zurück.

Bei einer vorteilhaften Ausführung der Erfindung sind an den Seitenwänden der Schutzhaube ringförmig angeordnete Segmente vorgesehen, die in Vertiefungen des Gehäuses eingreifen. Diese kammartig angeordneten und mit Zwischenräumen versehenen Segmente wirken mit Führungsflächen des Gehäuses so zusammen, daß sie beim Verschwenken der Schutzhaube den sich auf den Führungsflächen absetzenden Staub und Schmutz laufend wegschieben und somit einen zuverlässigen Betrieb der Schutzhaube gewährleisten.

Durch die erfindungsgemäße Ausbildung der Segmente mit sich nach innen verjüngenden Querschnitten erweitern sich die Zwischenräume entsprechend nach innen, so daß der Staub und Schmutz leicht nach innen abfallen kann, von wo er durch im Gehäuse angeordnete Öffnungen ins Freie fällt.

Diese Transportwirkung für Staub und Schmutz durch die sich erweiternden Zwischenräume zwischen den Segmenten wird unterstützt durch einen Teil der Motorkühlluft, die über geeignete Öffnungen im Gehäuse an die Seitenwände der Schutzhaube gelangt und die Zwischenräume zwischen den Segmenten nach innen durchströmt.

Im folgenden ist ein Ausführungsbeispiel der Erfindung unter Bezugnahme auf die Zeichnungen näher beschrieben.

Es zeigen:

Fig. 1 Seitenansicht der Handhobelmaschine, Seitenwand teilweise entfernt.

Fig. 2 Draufsicht auf die Handhobelmaschine mit Teilschnitt nach Linie II—II in Fig. 1.

Fig. 3 Seiten-ansicht der Schutzhaube.

Fig. 4 Schnitt nach Linie IV—IV in Fig. 3.

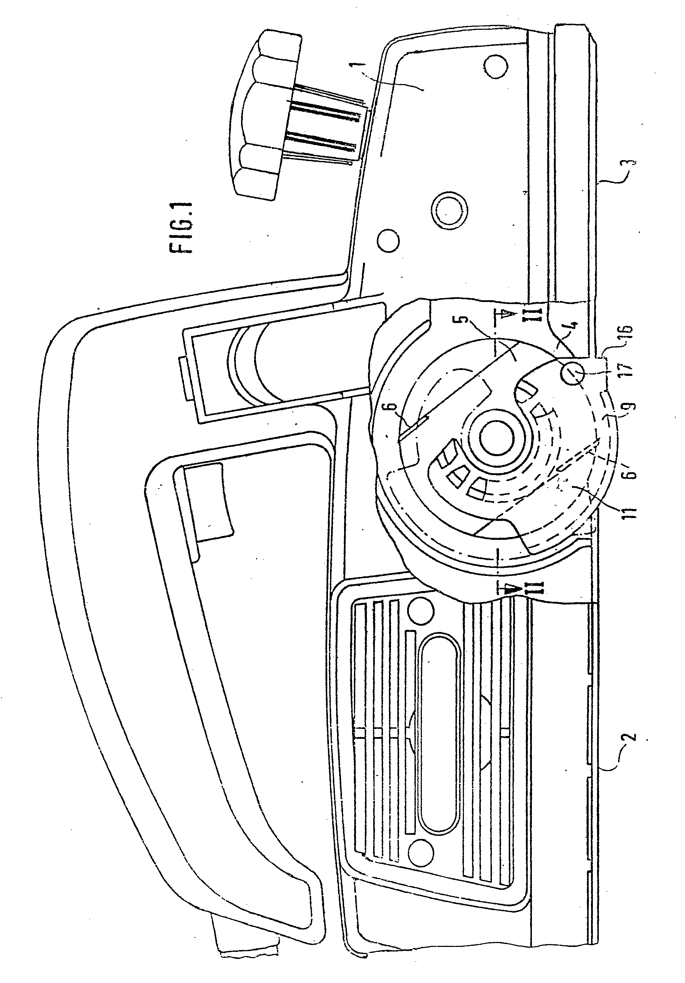

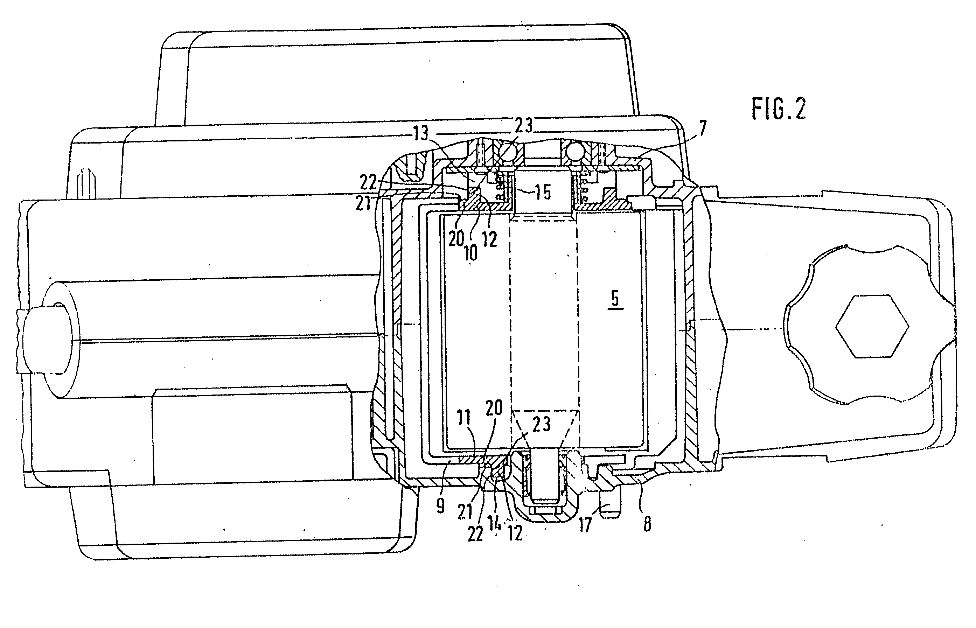

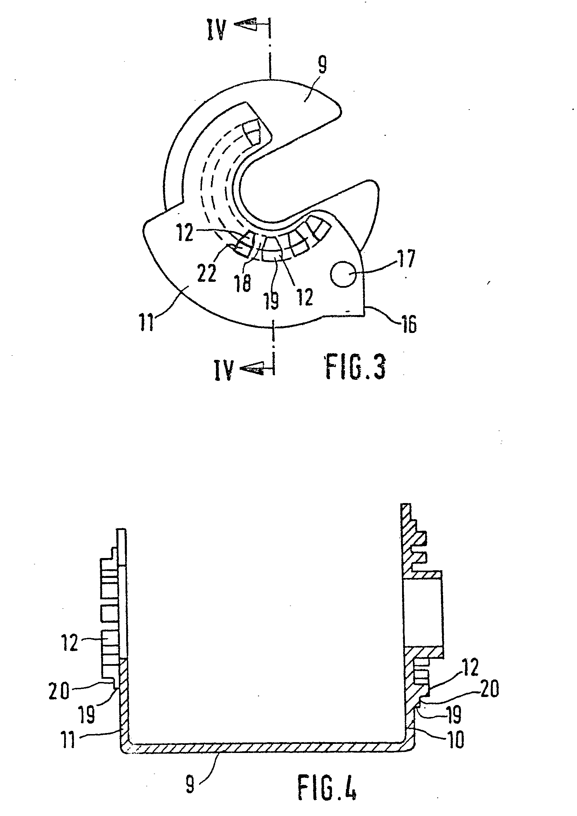

Die in Fig. 1 dargestellte Handhobelmaschine mit einem Gehäuse 1 wird mit einer festen Auflagefläche 2 und einer einstellbaren Auflagefläche 3 auf ein nicht dargestelltes Werkstück aufgesetzt. In einem Zwischenraum 4 greift ein Hobelkopf 5 zwischen die Auflageflächen 2, 3 ein und überragt diese mit seinen Hobelmessern 6. Er ist in den Schalen 7 und 8 von Gehäuse 1 drehbar gelagert und ist durch einen ebenfalls im Gehäuse gelagerten Elektromotor antreibbar. (Fig. 2).

Die von außen zugänglichen Teile von Hobelkopf 5 werden von einer Schutzhaube 9 umfaßt, deren Seitenwände 10, 11 mit ringförmig angeordneten Segmenten 12 versehen sind. Mit diesen Segmenten 12 ist die Schutzhaube 9 konzentrisch zur Achse von Hobelkopf 5 in Vertiefungen 13, 14 der Schalen 7 und 8 schwenkbar gelagert.

Eine zwischen Gehäuse 1 und Seitenwand 10 von Schutzhaube 9 eingespannte Schenkelfeder 15 hält dabei diese Schutzhaube 9 in der in Fig. 1 ausgezogen dargestellten Schutzstellung. Die Verwendung einer Schenkelfeder erweist sich als besonders vorteilhaft, da deren Funktion durch die unmittelbar aneinander anliegenden Federgänge auch bei starker Verschmutzung erhalten bleibt.

Die Schutzhaube 9 ist an ihrer Seitenwand 11 mit einer Anlaufkante 16 versehen, über die beim Ansetzen der Handhobelmaschine auf das Werkstück die Verschwenkung der Schutzhaube 9 eingeleitet wird, bis diese die in Fig. 1 strichpunktiert gezeichnete Lage einnimmt. Es ist jedoch auch möglich, den Hobelvorgang durch Eintauchen des Hobelkopfes in das Werkstück zu beginnen. In diesem Fall wird die Schutzhaube beim Verschieben der Handhobelmaschine infolge der Reibung zwischen Schutzhaube und Werkstückoberfläche in die Freigabestellung verschwenkt. An der Seitenwand 11 von Schutzhaube 9 ist noch ein Zapfen 17 vorgesehen, mit dem die Schutzhaube von Hand verschwenkt werden kann.

Wie auch die Fig. 3 und 4 zeigen, weisen die Segmente 12 einen sich nach innen verjüngenden Querschnitt auf, sodaß sich die zwischen den Segmenten 12 befindlichen Schlitze 18 nach innen erweitern. An die sich verjüngenden Querschnitte der Segmente 12 schließt sich nach außen eine achsial abgesetzte Stufe 19 an, die eine Führungsfläche 20 aufweist (Fig. 4).

In eingebautem Zustand wirken die Führungsflächen 20 mit den Stirnflächen 21 der Schalen 7, 8 so zusammen, daß die Schutzhaube 9 in achsialer Richtung geführt wird. Die Schlitze 18 auch im Bereich der Stufen 19 bewirken jedoch, daß beim Verschwenken der Schutzhaube 9 die Stirnfläche 21 saubergehalten wird.

Zur radialen Führung von Schutzhaube 9 dienen die Umfangsflächen 22 der Segmente 12, die in den Ringflächen 23 der Schalen 7 und 8 gelagert sind. Auch hier verhindert die kammartige Anordnung der Segmente 12 das Festsetzen von Staub und Schmutz.

**Patentansprüche**

1. Handhobelmaschine zur Bearbeitung von Holz oder dgl. mit einem in einem Gehäuse antreibbar gelagerten und von einer gegen Federwirkung schwenkbaren Schutzhaube (9) mindestens teilweise umfaßten Hobelkopf (5), dadurch gekennzeichnet, daß die Schutzhaube (9) in einem Zwischenraum (4), gebildet von parallelen, den Hobelkopf teilweise freigebenden Auflageflächen (2, 3) beidseitig mittels ringförmig angeordneter Segmente (12) im Gehäuse (1) gelagert ist.

2. Handhobelmaschine nach Anspruch 1, dadurch gekennzeichnet, daß zwischen den mit Kanten versehenen Segmenten (12) Schlitze (18) vorgesehen sind.

3. Handhobelmaschine nach Anspruch 2, dadurch gekennzeichnet, daß sich die Schlitze (18) nach innen erweitern.

4. Handhobelmaschine nach Anspruch 2 oder 3, dadurch gekennzeichnet, daß die Segmente (12) eine achsiale Stufe (19) aufweisen.

5. Handhobelmaschine nach einem der Ansprüche 1 bis 4, dadurch gekennzeichnet, daß im Gehäuse (1) Kanäle vorgesehen sind, die einen Teil der Motor-Kühlluft an die Seitenwände (10, 11) der Schutzhaube (9) leiten.

**Claims**

1. A portable planer for working wood or the like comprising a plane head (5) driveably seated in a housing and enclosed at least partially by a guard (9) mounted to pivot against the action of a spring, *characterized in that* the guard (9) is supported in the housing (1) in an interspace (4) formed by parallel supporting faces (2, 3) giving access to part of the plane head, by means of segments (12) provided on both sides in annular arrangement.

2. A portable planer in accordance with claim 1, *characterized in that* slots (18) are disposed between the segments (12) which are provided with edges.

3. A hand planer in accordance with claim 2, *characterized in that* the slots (18) broaden out in the inward direction.

4. A portable planer in accordance with claim 2 or 3, *characterized in that* the segments (12) comprise an axial shoulder (19).

5. A portable planer in accordance with any of claims 1 to 4, *characterized in that* the housing (1) comprises channels directing part of the cooling air of the motor against the side walls (10, 11) of the guard (9).

**Revendications**

1. Machine à raboter portative pour le travail du bois et similaires avec une tête de rabotage (5) reposant dans une carcasse de manière à pouvoir être entraînée et entourée au moins en partie d'un capot de protection (9) bloqué par effet de ressort, caractérisée par le fait que le capot de protection (9) est logé dans un interstice (4) formé par des surfaces d'appui parallèles (2, 3) laissant dépasser en partie la tête de rabotage et repose dans la carcasse (1), de part et d'autre de celle-ci, par l'intermédiaire de segments (12) disposés en arc de cercle.

2. Machine à raboter portative objet de la revendication 1, caractérisée par le fait que des fentes (18) sont prévues entre les segments (12) pourvues d'arêtes.

3. Machine à raboter portative objet de la revendication 2, caractérisée par le fait que les fentes (18) s'élargissent vers l'intérieur.

4. Machine à raboter portative objet de la revendication 2 ou 3, caractérisée par le fait que les segments (12) présentent un épaulement axial (19).

5. Machine à raboter portative objet de l'une des revendications 1 à 4, caractérisée par le fait que des canaux sont prévus dans la carcasse (1), qui dirigent une partie de l'air de refroidissement du moteur vers les faces latérales (10, 11) du capot de protection (9).

FIG.1

FIG.2

IV ◄┤

9

12

22 18 19 12

11 17

16

IV ◄┤ FIG.3

12

20 19

11

9 10

19 12 20

FIG.4